# EUROPÄISCHE PATENTANMELDUNG

(11) **EP 1 935 780 A2**
(43) Veröffentlichungstag der Anmeldung: **25.06.2008**
(21) Anmeldenummer: 07023815.9
(22) Anmeldetag: 08.12.2007
(51) Int. Cl.: B63G 8/38

(54) **Ausfahrgerät**

(30) Priorität: 22.12.2006 DE 102006061294
(71) Anmelder: Gabler Maschinenbau GmbH, 23568 Lübeck (DE)
(72) Erfinder: Krüger, Lorenz, Dipl.-Ing., 23552 Lübeck (DE); Wäntig, Ulrich, Dipl.-Ing., 23560 Lübeck (DE); Giera, Thomas, 23562 Lübeck (DE)
(74) Vertreter: Vollmann, Heiko

(57) **Zusammenfassung**

Das Ausfahrgerät für ein Unterseeboot ist mit einem ortsfesten Lagergestell versehen und weist mindestens einen im Querschnitt rechteckigen Schacht auf, in dem ein Ausfahrteil (8, 9) teleskopierbar angeordnet ist. Zwischen dem Schacht und dem Ausfahrteil (8, 9) sind Gleitlager (11, 12) vorgesehen, wobei mindestens ein Lager (11, 12) in Richtung im Wesentlichen quer zur Verfahrrichtung (15) des Ausfahrteils (8, 9) federnd vorgespannt ausgebildet ist.

## Beschreibung

Die Erfindung betrifft ein Ausfahrgerät, insbesondere für ein Unterseeboot mit den im Oberbegriff des Anspruchs 1 angegebenen Merkmalen. Bei Unterseebooten zählt es zum Stand der Technik, insbesondere im Turmbereich eine Vielzahl von Ausfahrgeräten anzuordnen, die für unterschiedliche Aufgaben vorgesehen sind und dazu dienen, dass aus getauchtem Zustand des Bootes heraus Bauteile über Wasser verbracht werden können, zum Beispiel ein Sehrohr, um optische Erkundungen durchführen zu können, oder eine Antenne, um über Funk kommunizieren zu können oder mittels GPS den Standort zu bestimmen. Darüber hinaus sind zahlreiche andere Anwendungen, wie beispielsweise Radareinrichtungen, Waffen und dergleichen bekannt, die an Ausfahrgeräten angeordnet sind.

Bekannte Ausfahrgeräte bestehen aus einem Lagergestell, das fundamentartig am Druckkörper des Unterseebootes verankert ist und das einen Schacht aufweist, in dem ein Ausfahrteil teleskopierbar angeordnet ist. Zwischen Schacht und Ausfahrteil sind Gleitlager vorgesehen, welche die sichere Führung und Lagerung vom Ausfahrteil im Schacht gewährleisten. Eine sichere und präzise Lagerung und Führung wird dadurch erreicht, dass ein im Querschnitt kreisrunder und rohrförmiger Schacht Verwendung findet, in dem das Ausfahrteil mit einem kolbenähnlichen Gleit- und Führungsteil angeordnet ist, wobei zwischen diesen Bauteilen umlaufende Gleitlager angeordnet sind, welche die auftretenden Kräfte vom Ausfahrteil auf den Schacht und umgekehrt übertragen.

Derartige kolben-zylinderartige Führungen sind herstellungstechnisch aufwändig, da sie vollflächig spanend bearbeitet werden müssen. Darüber hinaus sind sie aufgrund der erforderlichen Wanddicken, insbesondere bei größeren Querschnitten, vergleichsweise schwer. Auch bedarf es für den Einbau dieser Ausfahrgeräte eines nicht unerheblichen Raumes, da die hydraulisch betätigten Zylinder sowie die Führung für die Versorgungs- und Signalleitungen sämtlichst noch neben dem Ausfahrgerät anzuordnen sind.

Insoweit raumsparender sind Ausfahrgeräte mit im Querschnitt prismatischen Schächten und entsprechend geformten Gleit- und Führungsteilen, wie sie aus EP 0 711 702 B1 bekannt sind. Bei derartigen im Querschnitt prismatischen Schächten sind die Lagerstellen verstärkt auszubilden, an welchen das Ausfahrteil entlang gleitet und geführt sowie auch in ausgefahrenem Zustand sicher abgestützt wird. Der Fertigungsaufwand insbesondere der Schächte ist jedoch bei bekannten Konstruktionen sehr hoch, da die Schächte selbst üblicherweise als Schweißkonstruktion ausgebildet sind, die aufgrund der thermischen Belastung einem gewissen Verzug ausgesetzt sind, wohingegen die innen liegenden Lagerflächen nicht nur oberflächenbearbeitet sein müssen, sondern auch absolut planparallel auszubilden sind, um ein Verkanten des Ausfahrgerätes zu vermeiden und unabhängig von der Ausfahrstellung stets eine ausreichend gleitfähige, spielfreie und kraftübertragende Lagerung zu gewährleisten. Insbesondere bei Unterseebooten, die für den militärischen Einsatz konzipiert sind, muss darüber hinaus das Ausfahrgerät sowohl in eingefahrenem als auch in teleskopiertem Zustand einer hohen Schockbelastung standhalten können, was wiederum zu einem hohen Gewicht und fertigungstechnisch erheblichen Aufwand führt.

Vor diesem Stand der Technik liegt der Erfindung die Aufgabe zugrunde, ein gattungsgemäßes Ausfahrgerät so auszubilden, dass es einerseits möglichst leicht, platz- und gewichtssparend ist und andererseits fertigungstechnisch möglichst einfach hergestellt werden kann, jedoch hohe Querkräfte aufnehmen kann.

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgenden Beschreibung und der Zeichnung angegeben.

Das erfindungsgemäße Ausfahrgerät ist insbesondere für ein Unterseeboot auch für den militärischen Einsatz konzipiert und weist ein ortsfestes Lagergestell mit mindestens einem im Querschnitt prismatischen Schacht auf, in dem ein Ausfahrteil teleskopierbar angeordnet ist. Zwischen Schacht und Ausfahrteil sind Gleitlager vorgesehen. Gemäß der Erfindung ist mindestens ein Lager in einer Richtung im Wesentlichen quer zur Verfahrrichtung des Ausfahrteils federnd vorgespannt ausgebildet.

Das erfindungsgemäße Ausfahrgerät weist also zwischen Ausfahrteil und Schacht eine Lagerung auf, die aufgrund der Federwirkung elastisch ist, d. h. in Richtung quer zur Verfahrrichtung Kräfte aufnehmen kann, ohne dass die Lagerung als solche hierdurch negativ beeinflusst wird. Die Kräfte werden zumindest teilweise durch die Federkraft im Lager aufgenommen. Aufgrund der Vorspannung können bei kleinem Federweg große Kräfte aufgenommen werden. Darüber hinaus ist hierdurch stets die sichere Anlage der Lagerteile aneinander gewährleistet. Da jede Feder auch eine gewisse Dämpfungseigenschaft hat, ist die erfindungsgemäße Lagerung insbesondere auch im Hinblick auf Schockbelastung sehr von Vorteil. Dabei werden zweckmäßigerweise über den Umfang verteilt mehrere solcher federvorgespannter Gleitlager vorgesehen, welche das Ausfahrteil innerhalb des Schachtes sicher führen und abstützen. Ein weiterer wesentlicher Vorteil dieser Ausbildung liegt in der fertigungstechnischen Vereinfachung. Durch die Federung und Vorspannung des Lagers, genauer gesagt eines Lagerteils gegenüber dem anderen Lagerteil, wird zudem stets eine sichere Anlage und Kraftübertragung zwischen Ausfahrteil und Schacht bzw. umgekehrt gewährleistet, ohne dass die sonst üblichen engen Toleranzen hinsichtlich Planparallelität und Abstand der Lagerflächen zueinander einzuhalten sind.

Lineare Gleitlager, wie sie bei gattungsgemäßen Ausfahrgeräten bekannt sind, bestehen jeweils aus einer typischerweise schachtseitig angeordneten Gleitbahn und einem darauf hin- und hergleitenden, ausfahrteilseitig angeordneten Gleitkörper. Gemäß der Erfindung ist es besonders vorteilhaft und fertigungstechnisch einfach, den Gleitkörper federnd zu lagern und die Gleitbahn fest und starr am Schacht auszubilden, gleichwohl auch eine umgekehrte Anordnung denkbar ist.

Besonders vorteilhaft ist es, wenn alle Lager zwischen Ausfahrteil und Schacht als Drucklager ausgebildet sind, so dass ungeachtet der Belastungsrichtung stets nur Druckkräfte auf die jeweils belasteten Lager wirken. Hierdurch vereinfacht sich zudem die Konstruktion, da schachtseitig lediglich Gleitbahnen vorzusehen sind, deren Toleranz aufgrund der federnd vorgespannten Gleitkörper deutlich größer als bei bisher bekannten Konstruktionen sein kann.

Konstruktiv von Vorteil ist es, wenn gemäß einer Weiterbildung der Erfindung die Gleitbahnen durch Profile, vorzugsweise offene oder geschlossene Hohlprofile gebildet sind, die schachtseitig befestigt sind. Derartige Hohlprofile verleihen dem Schacht zum einen eine zusätzliche Stabilität, können mehrere Gleitbahnen bilden und sind zudem kostengünstig in der Herstellung. Beim Einsatz geeigneter Profile kann die übrige Schachtkonstruktion vergleichsweise leicht ausgelegt werden, was wiederum zu Material- und Gewichtseinsparungen führt.

Besonders vorteilhaft werden die Profile in den Ecken des Schachts angeordnet, da sie hier den Schacht am wirksamsten verstärken und dann auch in Verbindung mit dem Schacht große Kräfte aufnehmen können.

Vorteilhaft werden als Profile Hohlprofile, typischerweise Profile prismatischen Querschnitts, z. B. Rechteckprofile eingesetzt, die bei im Querschnitt rechteckiger Schachtausbildung mit zwei Seiten am Schacht anliegen und zwei um 90° versetzt zueinander liegende Gleitbahnen bilden. Bei davon abweichenden prismatischen Schachtquerschnitten können auch davon abweichende im Querschnitt prismatische Hohlprofile vorteilhaft eingesetzt werden, wobei der Winkel zwischen den Gleitflächen eines Hohlprofils vorzugsweise zwischen 60° und 120° aufspannen sollte, um Druckkräfte aus diesen Richtungen übertragen zu können.

Konstruktiv einfach und zugleich wirksam wird ein erfindungsgemäßer Gleitkörper über ein gummiartiges Elastomerelement mit dem Ausfahrteil verbunden oder ist ganz oder teilweise aus einem Elastomerelement gebildet. Die Elastomerelemente gegenüberliegender Lager werden dabei so ausgebildet und angeordnet, dass sie in Einbaulage vorgespannt sind, also stets einen gewissen Anpressdruck zwischen Gleitkörper und Gleitbahn gewährleisten. Gummiartige Elastomerelemente sind kostengünstig, können hohe Kräfte aufnehmen, haben gute Dämpfungseigenschaften und sind zudem seewasserfest.

Alternativ oder zusätzlich kann ein Gleitkörper auch in Richtung quer zur Verfahrrichtung beweglich am Ausfahrteil gelagert sein, wobei dann in Einbaulage ein vorgespanntes Federelement zwischen Ausfahrteil und Gleitkörper angeordnet ist. Dieses Federelement kann beispielsweise eine Schraubendruckfeder oder ein Tellerfederpaket oder auch ein gummielastisches Federelement sein. Dabei wird der Gleitkörper zweckmäßigerweise nicht unmittelbar am Ausfahrteil gelagert, sondern an einer Lagerkonsole, welche das oder die Federelemente aufnimmt und den ausreichenden Freiraum für den Federweg gibt.

Vorteilhaft ist der Gleitkörper nicht nur gegen Federkraft quer zur Verfahrrichtung bewegbar, sondern auch begrenzt schwenkbar am Ausfahrteil gelagert, so dass sich der Gleitkörper ungeachtet der Stellung zwischen Ausfahrteil und Schacht stets vollflächig an die Gleitbahn anlegt, wodurch unzulässig hohe Flächenpressungen im Lager vermieden werden.

Zweckmäßigerweise erfolgt hier eine kugelähnliche Lagerung, wobei der Schwenkwinkel auf wenige Grad begrenzt sein kann, so dass jedwede Verformung oder Ungenauigkeit zwischen Ausfahrteil und Schach ausgeglichen werden kann.

Das Ausfahrteil weist vorteilhaft ein Gleit- und Führungsteil auf, welches die Gleit- und Führungsfunktion des gesamten Ausfahrteils übernimmt und welches die Gleitkörper vorteilhaft in zwei in Ausfahrrichtung beabstandeten Ebenen trägt, um auch in ausreichendem Maße Momente vom Ausfahrteil auf den Schacht und umgekehrt übertragen zu können. Dabei ist das Gleit- und Führungsteil zweckmäßigerweise an die Querschnittsform des Schachtes hinsichtlich seiner Außenkontur angepasst, wohingegen das übrige Ausfahrteil zweckmäßigerweise eine gerundete, strömungsangepasste Form ausweist, wie sie bei Ausfahrgeräten an sich bekannt ist.

Bei dem erfindungsgemäßen Ausfahrgerät können der oder die Hubzylinder, welche zum Ein- und Ausfahren des Ausfahrteils aus dem Schacht vorgesehen sind, in an sich bekannter Weise neben dem Schacht angeordnet sein. Besonders vorteilhaft ist es jedoch, was bei Verwendung eines im Querschnitt prismatischen Schachts ohne weiteres möglich ist, den Hubzylinder innerhalb des Schachtes anzuordnen. Hierdurch ergibt sich eine sehr raumsparende kompakte Lösung, die insbesondere dann von Vorteil ist, wenn eine Vielzahl von Ausfahrgeräten nebeneinander anzuordnen ist.

Gemäß einer Weiterbildung der Erfindung ist zwischen dem bootsfesten Lagergestell mit dem Schacht und dem Ausfahrteil eine Energiekette vorgesehen, welche vorteilhaft sämtliche Versorgungs- und Datenleitungen zwischen Lagergestell und Ausfahrteil führt und vor zu engen Biegeradien schützt. Eine solche Energiekette kann vorteilhaft innerhalb des Schachtes stehend oder auch neben dem Schacht hängend angeordnet sein.

Die erfindungsgemäße Lagerung ist, wie eingangs erwähnt, insbesondere auch im Hinblick auf eine Schocksicherheit des Ausfahrgerätes von Vorteil. Zur Erhöhung dieser Schocksicherheit können gemäß einer Weiterbildung der Erfindung zwischen Schacht und Ausfahrteil ein oder mehrere weitere Formschlussmittel vorgesehen sein, welche das Ausfahrteil in Querrichtung zum Schacht formschlüssig sichern. Solche Formschlussmittel können konstruktiv einfach vorgesehen sein und sorgen dafür, dass bei eingefahrenem Ausfahrgerät sämtliche Kräfte quer zur Ausfahrrichtung zwischen Ausfahrteil und Schacht bzw. dem Fundament des Ausfahrgerätes sicher übertragen werden. Hierzu kann am Schachtboden z. B. ein zapfenartiger, nach oben gerichteter Vorsprung vorgesehen sein, der in eine fluchtend dazu an der Unterseite des Ausfahrteils vorgesehene Ausnehmung eingreift. Vorteilhaft ist an der Unterseite des Ausfahrteils ebenfalls ein zapfenähnlicher Vorsprung angeordnet, der wiederum in eine dazu fluchtende Ausnehmung an der Oberseite des Schachtbodens eingreift. Diese Formschlussmittel sind konstruktiv einfach, aufgrund ihrer Anordnung jedoch besonders wirksam. Sie nutzen darüber hinaus den ohnehin vorhandenen Ausfahrantrieb des Gerätes zur Aktivierung bzw. Deaktivierung aus.

Damit das Lagergestell des Ausfahrgeräts vergleichsweise leicht gebaut werden kann, ist gemäß einer Weiterbildung der Erfindung vorgesehen, die unteren Enden der den Schacht typischerweise in seinen Ecken abstützenden und Gleitbahnen bildenden Profile nach unten über das Lagergestell hinaus zu verlängern und dort formschlüssig im Druckkörper festzulegen, um auf diese Weise insbesondere die bei Schockbelastung auftretenden hohen Querkräfte unter Umgehung des Lagergestells möglichst direkt in den Druckkörper einleiten zu können. Konstruktiv wird dies vorteilhaft dadurch erzielt, dass die Profile zum Boden hin geschlossen ausgebildet und dort mit einem Gewindezapfen versehen sind, der eine Ausnehmung in der Bodenplatte des Lagergestells durchsetzt und rückseitig dazu über eine Mutter mit dem Lagergestell verschraubt ist. Diese Mutter sitzt mit ihrem Außenumfang passgenau in einer darunter angeordneten Sacklochbohrung in der Außenwand des Druckkörpers.

Die Erfindung ist nachfolgend anhand von in der Zeichnung dargestellten Ausführungsbeispielen näher erläutert. Es zeigen:
- Fig. 1: in stark vereinfachter schematischer Ansicht ein Unterseeboot mit einem herausgebrochenen Abschnitt in perspektivischer Darstellung zur Verdeutlichung der Anordnung des Ausfahrgerätes am Unterseeboot,
- Fig. 2: einen Teil des Unterseeboots im Querschnitt mit ausgefahrenem Ausfahrgerät,
- Fig. 3: das vollständig eingefahrene Ausfahrgerät in Darstellung nach Fig. 2,
- Fig. 4: einen Längsschnitt durch das Gleit- und Führungsteil des Ausfahrgerätes mit zugehörigem Schachtabschnitt,
- Fig. 5: einen Querschnitt durch das Ausfahrgerät im Bereich des Gleit- und Führungsteils,
- Fig. 6: in vergrößerter Darstellung die Einzelheit VI in Fig. 5,
- Fig. 7: in perspektivischer Darstellung eine alternative Ausbildung und Lagerung eines Gleitkörpers,
- Fig. 8: eine Schnittdarstellung der Gleitkörperausbildung nach Fig. 7,
- Fig. 9: eine Draufsicht auf die Gleitkörperlagerung nach Fig. 7,
- Fig. 10: einen Schnitt längs der Schnittlinie B-B in Fig. 9,
- Fig. 11: in schematischer Darstellung ein Ausfahrgerät mit ausgefahrenem Ausfahrteil und hängender Energiekettenanordnung,
- Fig. 12: das Ausfahrgerät gemäß Fig. 11 in eingefahrenem Zustand,
- Fig. 13: in schematischer Darstellung ein Ausfahrgerät mit ausgefahrenem Ausfahrteil und stehender Energiekettenanordnung,
- Fig. 14: das Ausfahrgerät gemäß Fig. 13 in eingefahrener Stellung,
- Fig. 15: in schematischer Draufsicht die Anordnung von fünf Ausfahrgeräten nebeneinander mit rechteckigem Schachtquerschnitt,
- Fig. 16: die Anordnung von fünf Ausfahrgeräten nebeneinander mit trapezförmigem Schachtquerschnitt in Darstellung nach Fig. 15,
- Fig. 17: die Anordnung von fünf Ausfahrgeräten nebeneinander mit dreieckigem Schachtquerschnitt in Darstellung nach Fig. 15.,

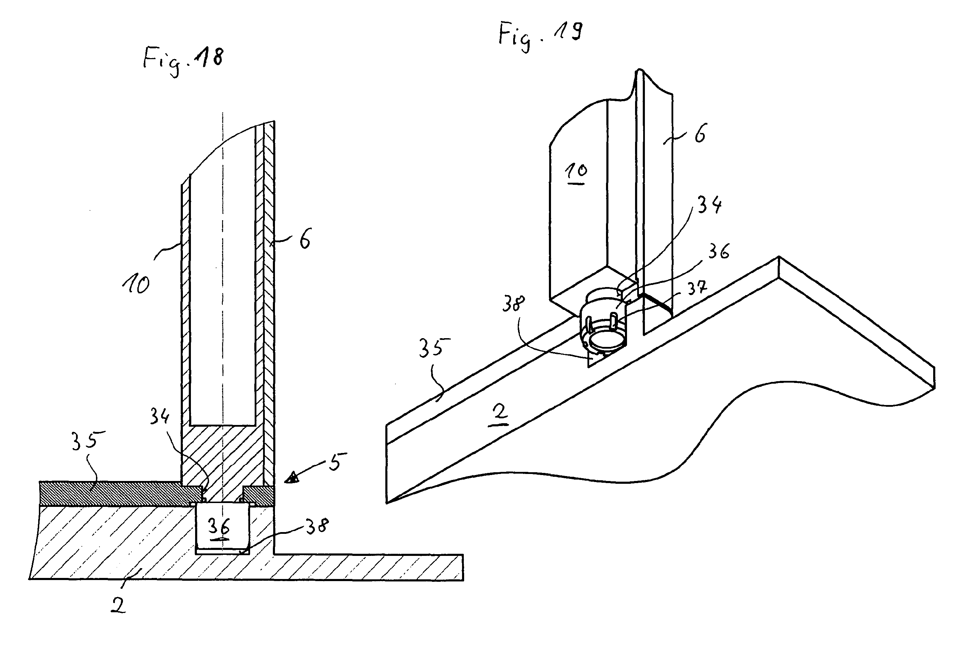

- Fig. 18: einen Schnitt des Bereiches, in dem ein Rechteckhohlprofil bodenseitig befestigt ist und
- Fig. 19: die Anordnung gemäß Fig. 18 in perspektivischer Darstellung.

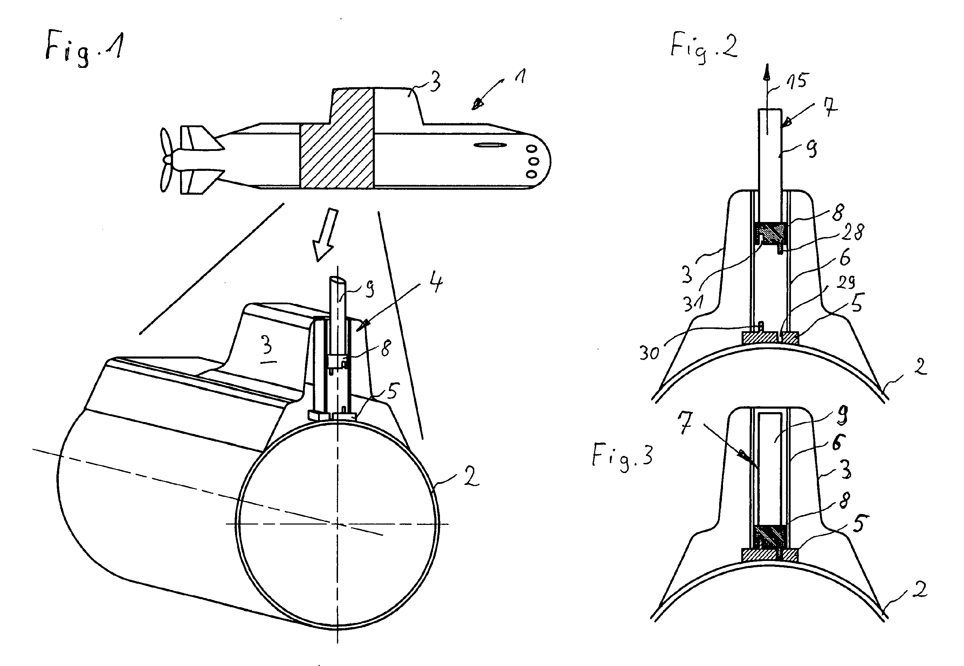

Das in Fig. 1 dargestellte Unterseeboot 1 weist einen zylindrischen Druckkörper 2 auf, an dem im Bereich des Turmaufbaus 3 hier beispielhaft ein Ausfahrgerät 4 dargestellt ist. Das Ausfahrgerät 4 weist ein Lagergestell 5 auf, welches fest mit dem Druckkörper 2 verbunden ist und das Fundament des Ausfahrgerätes 4 bildet. Das Lagergestell und Fundament 5 trägt einen vom Druckkörper 2 in normaler Fahrstellung senkrecht nach oben gerichteten Schacht 6, in dessen Inneren ein Ausfahrteil 7 teleskopierbar angeordnet ist. Das Ausfahrteil 7 weist ein Gleit- und Führungsteil 8 auf, mit dem es innerhalb des Schachtes 6 gelagert und geführt ist. Der sich über das Gleit- und Führungsteil 8 erstreckende Teil 9 des Ausfahrteils 7 bildet den Teil, der aus dem Schacht 6 herausgefahren werden kann und dessen freies Ende die Wasseroberfläche durchdringt, während das Boot getaucht bleibt.

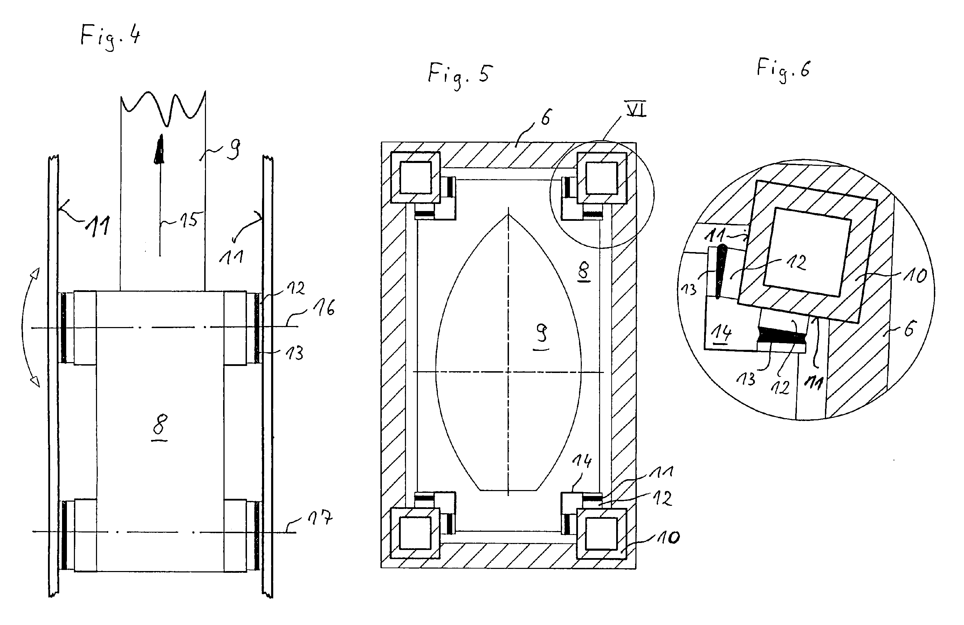

Die Lagerung des Ausfahrteils 7, insbesondere des Gleit- und Führungsteils 8 innerhalb des Schachtes 6 ist anhand der Figuren 4 bis 6 im Einzelnen dargestellt. Der im Querschnitt (Fig. 5) rechteckige Schacht 6 ist als Schweißkonstruktion ausgebildet und weist in seinen vier Ecken Rechteckhohlprofile 10 auf, die einen quadratischen Querschnitt aufweisen, den Schacht 6 verstärken und jeweils zwei längs des Schachtes 6 sich erstreckende, um 90° versetzt zueinander angeordnete Gleitbahnen 11 als Lagerflächen bilden.

Jede Gleitbahn 11 bildet Teil eines Gleitlagers, dessen anderer Teil durch einen Gleitkörper 12 gebildet ist, der am Gleit- und Führungsteil 8 befestigt ist. Jeder Gleitkörper 12 ist über ein Federelement 13, das bei der anhand der Figuren 4 bis 6 dargestellten Ausführungsvariante aus Hartgummi besteht, mit dem Gleit- und Führungsteil 8 verbunden. Die Anordnung der Gleitkörper 12 mit den Federelementen 13 am Gleit-und Führungsteil 8 ist so gewählt, dass alle sechzehn Gleitkörper 12 an den zugehörigen, gegenüberliegenden Gleitbahnen 11 spielfrei anliegen. Dabei sind die Federelemente 13 vorgespannt, so dass eine Anlage der Gleitkörper 12 auch dann gewährleistet ist, wenn Querkräfte auf den Schacht 6 oder insbesondere den Teil 9 des Ausfahrteils 7 wirken. Die vorgespannten Federelemente 13 sorgen nicht nur für eine Anlage der Gleitkörper 12 an den Gleitbahnen 11 im Belastungsfall, sondern dienen auch zum Ausgleich von Fertigungstoleranzen, wie dies anhand von Fig. 6 zur Veranschaulichung in extremer Form dargestellt ist. Dort ist das Rechteckhohlprofil 10 nicht exakt parallel zur Wandung des Schachtes 6 ausgerichtet, so dass sich ein Winkelversatz ergibt, der durch die dort dargestellten beiden Federelemente 13 ohne weiteres ausgeglichen wird, so dass die Gleitkörper 12 vollflächig an den Gleitbahnen 11 anliegen. Der anhand von Fig. 6 dargestellte Winkelversatz stellt nur eine der möglichen Toleranzen dar. So kann sich auch der Abstand gegenüberliegender Gleitbahnen 11 über die Länge ändern, oder die Gleitbahnen 11 können Fehler in ihrer Planparallelität oder ihrer Planfläche selbst aufweisen. All diese Fehler werden in Grenzen durch die vorgespannten Federelemente 13 ausgeglichen.

Das Gleit- und Führungsteil 8, dessen Form, wie Fig. 5 zeigt, im Wesentlichen der Innenkontur des Schachtes 6 entspricht, weist an allen vier Ecken entsprechend den im Schacht 6 dort angeordneten Rechteckhohlprofilen 10 Aussparungen 14 aus dem sonst rechteckigen Querschnitt auf. Der dadurch gebildete Freiraum wird durch die Rechteckhohlprofile 10 sowie die dazwischen angeordneten Gleitkörper 12 und Federelemente 13 ausgefüllt. Im Übrigen ist das Gleit- und Führungsteil 8 als geschlossener Hohlkörper ausgebildet und ggf. an der Unterseite geöffnet. In Ausfahrrichtung 15 schließt sich nach oben an das Gleit-und Führungsteil 8 der im Querschnitt strömungsgerundet ausgebildete Teil 9 an, der nach oben aus dem Turmaufbau 3 herausfahrbar ist, wie dies anhand von Fig. 2 dargestellt ist. Um eine sichere Lagerung und Führung des Gleit- und Führungsteils 8 innerhalb des Schachtes zu gewährleisten, sind insgesamt zwei mal acht Lagerstellen vorgesehen, und zwar in in Ausfahrrichtung 15 voneinander beabstandeten Ebenen 16 und 17.

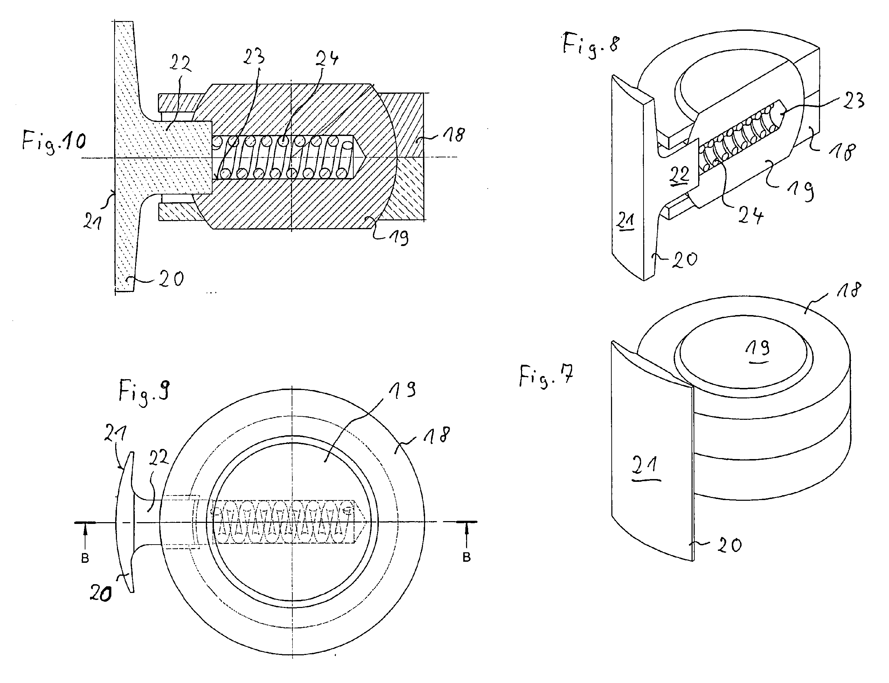

Die vorgespannten Federelemente 13, wie sie anhand der Figuren 4 bis 6 dargestellt sind, dienen nicht nur zur Aufnahme von Kräften senkrecht zur jeweiligen Gleitbahn 11, sondern auch zu den weiter oben beschriebenen Toleranzen bzw. einen möglichen Winkelversatz. Sämtliche insgesamt sechzehn Lager des Gleit- und Führungsteils 8 sind als Drucklager ausgebildet und stützen sich an den insgesamt acht Gleitbahnen 11 ab, die sich im Wesentlichen über die gesamte Länge des Schachtes 6 erstrecken. In dem vorbeschriebenen Ausführungsbeispiel sind die Federelemente 13 zwischen den Gleitkörpern 12 und einem entsprechenden Auflagerkörper am Gleit- und Führungsteil 8 dargestellt. Diese Bauteile können jedoch auch durch ein einziges, beispielsweise aus Hartgummi bestehendes Gleit- und Federelement gebildet sein oder beispielhaft so, wie dies anhand der Figuren 7 bis 10 dargestellt ist.

Dort ist eine Lagerkonsole 18 vorgesehen, die ringförmig und mit balliger Innenkontur ausgebildet ist. Diese Lagerkonsole 18 ist zu Montagezwecken zweigeteilt und schließt ein entsprechend ballig geformtes Innenteil 19 ein, in welchem ein Gleitkörper 20 quer zur Gleitfläche 21 verschiebbar geführt ist. Hierzu weist der Gleitkörper 20 an seiner von der Gleitfläche 21 abgewandten Seite einen Zapfen 22 auf, der in einer entsprechenden Ausnehmung der Lagerkonsole 18 mit Abstand eingreift und bis in eine abgestufte Bohrung 23 des Innenteils 19 reicht, in dessen sacklochartigem Innenraum eine Schraubendruckfeder 24 federvorgespannt angeordnet ist, die den Zapfen 22 in Richtung zur Gleitfläche 21 kraftbeaufschlagt. Die Gleitfläche 21 ist, wie insbesondere in Fig. 9 zu sehen ist, in Querrichtung zur Ausfahrrichtung 15 gekrümmt ausgebildet, um die anhand von Fig. 6 in übertriebener Form dargestellten Winkeltoleranzen der Gleitbahnen 11 ausgleichen zu können. In Ausfahrrichtung 15 ist die Gleitfläche 21 geradlinig ausgebildet. Die ballige Lagerung des Innenteils 19 innerhalb der Lagerkonsole 18 gleicht etwaige Planparallelitätsfehler der Gleitbahnen 11 in Ausfahrrichtung 15 aus und sorgt somit für eine flächige bzw. linienförmige Anlage über die gesamte Höhe der Fläche 21.

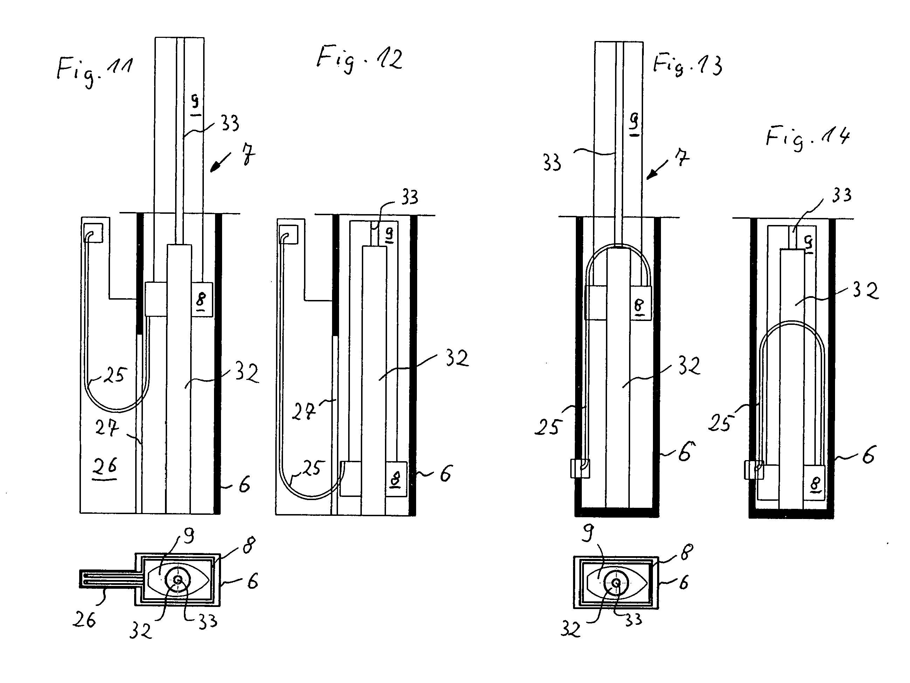

Anhand der Figuren 11 bis 14 ist beispielhaft dargestellt, wie die Leitungsverbindungen zwischen dem ortsfesten (bootsfesten) Schacht 6 einerseits und dem dazu relativ bewegbaren Ausfahrteil 7 andererseits zweckmäßigerweise angeordnet werden. In beiden Ausführungen findet eine an sich bekannte Energiekette 25 Anwendung. Es handelt sich hierbei um eine Hohlkette, deren typischerweise einseitig offener Innenraum sämtliche Daten und Versorgungsleitungen, beispielsweise Hydraulik-, Elektro- und Glasfaserleitungen zur Energie- und Datenübertragung aufnimmt und schützt. Die Kettenglieder dieser Energiekette 25 sind begrenzt beweglich gelagert, so dass der Biegeradius der Kette begrenzt ist und somit die darin liegenden Leitungen gegen unzulässig enges Biegen schützt. Während bei der Ausführung nach den Figuren 11 und 12 für die Energiekette 25 ein gesonderter, sich außen an den Schacht 6 seitlich anschließender Schachtabschnitt 26 vorgesehen ist, welcher über einen Schlitz 27 in einer Seitenwand des Schachtes 6 mit diesem verbunden ist, ist bei der Ausführung gemäß den Figuren 13 und 14 die Energiekette 25 in den Schacht 6 eingegliedert, bedarf also keines zusätzlichen Einbauraumes. Bei der Ausführung gemäß den Figuren 11 bis 12 ist die Energiekette 25 hängend angeordnet, d. h. sie erstreckt sich von einer Seitenwand des Schachtabschnitts 26 durch den Schlitz 27 hindurch bis zur Unterseite des Gleit- und Führungsteils 8. Bei der Ausführung gemäß den Figuren 13 und 14 ist die Energiekette 25 stehend angeordnet, d. h. sie ist im Schacht 6 im unteren Bereich seitlich angeschlagen, verläuft längs der Schachtwand nach oben, am Gleit- und Führungsteil 8 seitlich vorbei und ist dort von oben am Gleit- und Führungsteil 8 befestigt. Bei letzterer Anordnung muss zwischen dem Teil 9 des Ausfahrteils 7 und dem Schacht 6 ein entsprechender Freiraum für die Energiekette 25 vorgesehen sein, wohingegen bei der Ausführung nach den Figuren 11 und 12 auf einen solchen Freiraum verzichtet werden kann, stattdessen ein Schachtabschnitt 26 vorzusehen ist, der jedoch weitgehend offen gestaltet sein kann. Der Antrieb des Ausfahrteils 7 erfolgt mittels eines hydraulischen Hubzylinders 32, der sich am Boden des Schachtes 6 einerseits und mit dem freien Ende seiner Kolbenstange 33 am Teil 9 des Ausfahrteils 7 abstützt.

Um die Schockfestigkeit der Konstruktion bei eingefahrenem Ausfahrteil 7 zu erhöhen, ist eine zusätzliche Formschlussverbindung zwischen dem Gleit- und Führungsteil 8 und dem Lagergestell und Fundament 5 vorgesehen, welche insbesondere zur Aufnahme von Kräften quer zur Ausfahrrichtung 15 vorgesehen ist. Hierzu ist an der Unterseite jedes Gleit-und Führungsteils 8 ein zapfenartiger Vorsprung 28 vorgesehen und dazu fluchtend im Fundament 5 eine Ausnehmung 29. Darüber hinaus ist auf dem Fundament 5 ein nach oben gerichteter zapfenartiger Vorsprung 30 vorgesehen und dazu in Ausfahrrichtung 15 fluchtend in der Unterseite des Gleit- und Führungsteils 8 eine entsprechende Ausnehmung 31. Beim Einfahren des Ausfahrteils 7 gelangen die Vorsprünge 28 und 30 in die Ausnehmungen 29 und 31, wie dies anhand von Fig. 3 schematisch dargestellt ist und bilden einen zusätzlichen Formschluss in Querrichtung.

Damit die bei Schockbelastung auftretenden (horizontalen) Querkräfte des Ausfahrgeräts 4 nicht vollständig vom Lagergestell 5 aufgenommen werden müssen ist vorgesehen, die unteren Enden der Rechteckhohlprofile 10 geschlossen auszubilden und dort jeweils einen stirnseitigen nach unten vorspringenden Gewindezapfen vorzusehen, welcher durch eine entsprechende Ausnehmung 34 in dem dort als Fundamentplatte 35 ausgebildeten Lagergestell 5 ragt und an seinem überragenden Ende mit einer das Profil 16 gegenüber der Fundamentplatte 35 formschlüssig festlegenden Mutter 36 versehen ist. Mittels einer solchen Mutter 36 ist jedes Rechteckhohlprofil 10 mit der Fundamentplatte 35 verspannt. Jede Mutter 36 weist einen zylinderischen Außenumfang auf, der lediglich durch Ausnehmungen 37 unterbrochen ist, über welche ein Werkzeug zum Anziehen der jeweiligen Mutter 36 angreifen kann. Der zylinderische Außenumfang jeder Mutter 36 sitzt in einem entsprechend passgenau ausgebildeten Sackloch 38, das in der Außenseite des Druckkörper 2 vorgesehen ist. Auf diese Weise können insbesondere die bei Schockbelastung auftretenden hohen Querkräfte vom Ausfahrgerät 4 über die Rechteckhohlprofile 10 weitgehend unter Umgehung des Lagergestells 5 direkt in den Druckkörper 2 eingeleitet werden, der diese sicher aufnehmen kann.

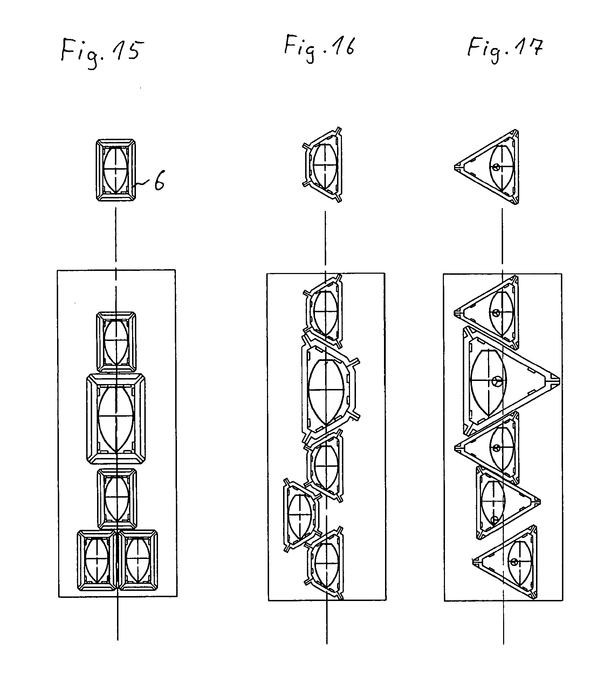

Das anhand der Figuren 4 und 5 dargestellte Ausfahrgerät, das einen im Querschnitt rechteckigen Schacht 6 aufweist, kann mit mehreren solcher Ausfahrgeräte mit rechteckigem Schacht unterschiedlicher Größe unmittelbar nebeneinander angeordnet sein, wie dies anhand von Fig. 15 schematisch dargestellt ist. Bei einer trapezförmigen Schachtform ergeben sich Anordnungsmöglichkeiten, wie sie anhand von Fig. 16 beispielhaft dargestellt sind. Fig. 17 zeigt die Nebeneinanderanordnung von Ausfahrgeräten mit im Querschnitt dreieckigen Schächten unterschiedlicher Größe. Die Anordnung der Gleitbahnen wird dann entsprechend gewählt, wobei statt der Rechteckhohlprofile ggf. auch offene Hohlprofile oder Flachprofile eingesetzt werden, so wie dies konstruktiv am günstigsten ist.

### Bezugszeichenliste

- 1 -: Unterseeboot
- 2 -: Druckkörper
- 3 -: Turmaufbau
- 4 -: Ausfahrgerät
- 5 -: Lagergestell
- 6 -: Schacht
- 7 -: Ausfahrteil (das)
- 8 -: Gleit- und Führungsteil (das)
- 9 -: Teil (der)
- 10 -: Rechteckhohlprofile
- 11 -: Gleitbahnen
- 12 -: Gleitkörper
- 13 -: Federelemente
- 14 -: Aussparungen
- 15 -: Ausfahrrichtung
- 16 -: Ebene
- 17 -: Ebene
- 18 -: Lagerkonsole
- 19 -: Innenteil
- 20 -: Gleitkörper
- 21 -: Gleitfläche
- 22 -: Zapfen
- 23 -: Bohrung
- 24 -: Schraubendruckfeder
- 25 -: Energiekette
- 26 -: Schachtabschnitt
- 27 -: Schlitz
- 28 -: Vorsprung (in 8)
- 29 -: Ausnehmung (in 5)
- 30 -: Vorsprung (in 5)
- 31 -: Ausnehmung (in 8)
- 32: Hubzylinder
- 33: Kolbenstange
- 34: Ausnehmungen
- 35: Fundamentplatte
- 36: Muttern
- 37: Ausnehmungen
- 38: Sacklöcher

## Patentansprüche

1. Ausfahrgerät insbesondere für ein Unterseeboot, mit einem ortsfesten Lagergestell (5) mit mindestens einem im Querschnitt prismatischen Schacht (6), in dem ein Ausfahrteil (7) teleskopierbar angeordnet ist, wobei zwischen Schacht (6) und Ausfahrteil (7) Gleitlager (11, 12) vorgesehen sind, **dadurch gekennzeichnet, dass** mindestens ein Lager (11, 12) in einer Richtung im Wesentlichen quer zur Verfahrrichtung (15) des Ausfahrteils (7) federnd vorgespannt ausgebildet ist.

2. Ausfahrgerät nach Anspruch 1, **dadurch gekennzeichnet, dass** ein Lager durch eine Gleitbahn (11) und einen darauf verfahrbar angeordneten Gleitkörper (12, 20) gebildet ist und dass der Gleitkörper (12, 20) federnd gelagert ist.

3. Ausfahrgerät nach einem der vorhergehenden Ansprüche, **dadurch gekennzeichnet, dass** alle Lager als Drucklager ausgebildet sind und dass die Gleitkörper (12, 20) am Ausfahrteil (7) und die Gleitbahnen (11) am Schacht (6) angeordnet sind.

4. Ausfahrgerät nach einem der vorhergehenden Ansprüche, **dadurch gekennzeichnet, dass** die Gleitbahnen (11) durch Profile (10), vorzugsweise Hohlprofile gebildet sind, die schachtseitig befestigt sind.

5. Ausfahrgerät nach einem der vorhergehenden Ansprüche, **dadurch gekennzeichnet, dass** die Profile (10) in Ecken des Schachts (6) angeordnet sind.

6. Ausfahrgerät nach einem der vorhergehenden Ansprüche, **dadurch gekennzeichnet, dass** ein Profil (10) zwei Gleitbahnen (11) bildet, deren Gleitflächen einen Winkel zwischen vorzugsweise 60° bis 120° aufspannen.

7. Ausfahrgerät nach einem der vorhergehenden Ansprüche, **dadurch gekennzeichnet, dass** ein Gleitkörper (12) über ein vorzugsweise gummiartiges Elastomerelement (13) mit dem Ausfahrteil (7) verbunden ist.

8. Ausfahrgerät nach einem der vorhergehenden Ansprüche, **dadurch gekennzeichnet, dass** ein Gleitkörper (12, 20) in Richtung quer zur Verfahrrichtung (15) beweglich am Ausfahrteil (7) gelagert ist, wobei ein in Einbaulage vorgespanntes Federelement (13, 24) zwischen Ausfahrteil (7) und Gleitkörper (12, 20) angeordnet ist.

9. Ausfahrgerät nach einem der vorhergehenden Ansprüche, **dadurch gekennzeichnet, dass** ein Gleitkörper (12, 20) begrenzt schwenkbar am Ausfahrteil (7) gelagert ist.

10. Ausfahrgerät nach einem der vorhergehenden Ansprüche, **dadurch gekennzeichnet, dass** das Ausfahrteil (7) ein Gleit- und Führungsteil (8) aufweist, welches die Gleitkörper (12, 20) in zwei in Ausfahrrichtung beabstandeten Ebenen (16, 17) trägt.

11. Ausfahrgerät nach einem der vorhergehenden Ansprüche, **dadurch gekennzeichnet, dass** das Gleit- und Führungsteil (8) eine an die Querschnittsform des Schachtes (6) angepasste Außenkontur aufweist und das übrige Ausfahrteil (9) eine gerundete strömungsangepasste Form aufweist.

12. Ausfahrgerät nach einem der vorhergehenden Ansprüche, **dadurch gekennzeichnet, dass** innerhalb des Schachtes (6) ein Hubzylinder (32) zum Ein- und Ausfahren des Ausfahrteils angeordnet ist.

13. Ausfahrgerät nach einem der vorhergehenden Ansprüche, **dadurch gekennzeichnet, dass** eine Energiekette (25) vorgesehen ist, welche Versorgungs- und Datenleitungen zwischen dem ortsfesten Lagergestell (5) und dem Ausfahrteil (7) führt und die in dem Schacht (6) stehend oder neben dem Schacht (6) hängend angeordnet ist.

14. Ausfahrgerät nach einem der vorhergehenden Ansprüche, **dadurch gekennzeichnet, dass** zwischen Schacht (6) und Ausfahrteil (7) Formschlussmittel (28 - 31) vorgesehen sind, welche das Ausfahrteil (7) in Querrichtung zum Schacht (6) formschlüssig sichern.

15. Ausfahrgerät nach einem der vorhergehenden Ansprüche, **dadurch gekennzeichnet, dass** das am Schachtboden und/oder an der Unterseite des Ausfahrteils (7) mindestens ein Vorsprung (28, 30) und/oder dazu fluchtende Ausnehmungen (29, 31) vorgesehen sind, die bei vollständig eingefahrenem Ausfahrteil (7) ineinander greifen.

16. Ausfahrgerät nach einem der vorhergehenden Ansprüche, **dadurch gekennzeichnet, dass** mindestens ein, eine Gleitbahn aufweisendes Profil an seinem unteren Ende Formschlussmittel (36) aufweist, mit denen es formschlüssig am Druckkörper (2) festgelegt ist.

17. Ausfahrgerät nach Anspruch 16, **dadurch gekennzeichnet, dass** an dem unteren Ende mindestens eines Profils (10) ein mit Gewinde versehenen Zapfen vorgesehen ist, welcher eine Ausnehmung (34) im Boden des Lagergestells (5) durchsetzt, und der mit einer dieses Profil am Lagergestell 5 festlegenden Mutter (36) versehen ist, die in einer Ausnehmung (38) des Druckkörpers (2) formschlüssig eingegliedert ist.

18. Unterseeboot mit einem oder mehreren Ausfahrgeräten nach einem der vorhergehenden Ansprüche.
